# EUROPÄISCHE PATENTSCHRIFT

(11) **EP 3 941 611 B1**
(45) Veröffentlichungstag und Bekanntmachung des Hinweises auf die Patenterteilung: **13.08.2025**
(21) Anmeldenummer: 20715781.9
(22) Anmeldetag: 20.03.2020
(51) Int. Cl.: B01D 53/62, B01D 53/82, B01D 53/96, B01D 53/34, B01J 6/00, B01J 8/02, B01J 20/04, B01J 20/30, C09K 5/14, F28D 20/00

(54) **VERFAHREN ZUR KOHLENDIOXIDABTRENNUNG AUS ABGASEN**
METHOD FOR SEPARATING CARBON DIOXIDE FROM WASTE GASES
PROCÉDÉ DE SÉPARATION DU DIOXYDE DE CARBONE DES GAZ D'ÉCHAPPEMENT

(30) Priorität: 22.03.2019 DE 102019107440
(43) Veröffentlichungstag der Anmeldung: 26.01.2022
(73) Patentinhaber: Otto-von-Guericke-Universität Magdeburg, 39106 Magdeburg (DE)
(72) Erfinder: SPECHT, Eckehard, 22335 Hamburg (DE)
(74) Vertreter: Braeuning Schubert Patentanwälte GbR
(86) Internationale Anmeldenummer: PCT/EP2020/057791
(87) Internationale Veröffentlichungsnummer: WO 2020/193410

(56) Entgegenhaltungen:
- EP-A2- 2 072 111
- WO-A1-00/76629
- CN-A- 109 280 559
- FR-A1- 2 973 807
- US-A1- 2003 150 163

## Beschreibung

Die vorliegende Erfindung betrifft ein Verfahren zur Kohlendioxidabtrennung aus Abgasen mit interner Rückgewinnung der Reaktionsenthalpie.

Zur Vermeidung des Klimawandels ist es erforderlich, das durch Verbrennung entstehende Gas Kohlendioxid aus den Verbrennungsprodukten zu isolieren oder wieder zu verwenden. Hierzu werden im Stand der Technik unterschiedlichste Verfahren und Vorrichtungen beschrieben.

Kohlendioxid kann aus Abgasen abgetrennt werden, wenn diese über Kalkpartikel (CaO) geleitet werden (Calcium Looping). Das Kohlendioxid reagiert dann gemäß CaO+CO₂ -> CaCO₃ zu Kalkstein (CaCO₃). Aus dem gebildeten Kalkstein muss das CO₂ gemäß CaCO₃ -> CaO+CO₂ wieder ausgetrieben werden. Dies wird bei den bisherigen Verfahren gewährleistet, in dem ein fossiler Brennstoff mit reinem Sauerstoff verbrannt wird. Reiner Sauerstoff ist notwendig, da sonst das CO₂ wieder mit Luft verunreinigt würde. Eine Verbrennung mit reinem Sauerstoff ist stets energieintensiv. Darüber hinaus wird zusätzliches Kohlendioxid erzeugt.

Beispielsweise beschreibt die EP 2 644 256 A1 ein Verfahren und eine Vorrichtung zur effizienten Kohlendioxidabtrennung. Dabei werden die Kalzination und die Karbonisation in unterschiedlichen Anlagenteilen durchgeführt, wobei in den jeweiligen Anlagenteilen enthaltenen Feststoffen jeweils wechselseitig überführt werden müssen. In der WO 2005/046862 A1 wird ferner ein Verfahren zur Reaktivierung von Absorptionsmitteln aus Kalkstein durch Kohlendioxid beschrieben. Die WO 2005/046863 A1 beschreibt weiterhin eine Vorbehandlung von Absorptionsmitteln aus Kalkstein durch Hydration. Die im Stand der Technik bekannten Verfahren weisen erhebliche Nachteile auf, da diese sehr energieintensiv sind. Auch ist die Anzahl der Regenerationszyklen für den Kalkstein relativ klein.

Weiterhin beschreibt die EP 2 072 111 A2 ein Verfahren zur Kohlen-stoffdioxid-Trennung mittels zyklischer chemischer Reaktion mit Partialdruckwechsel. Das Verfahren umfasst die Reaktion des reaktiven Gases mit einem Bett aus reaktivem Feststoff in einer exothermen Reaktion, um einen zweiten Feststoff und ein Produktgas zu erzeugen, aus dem das reaktive Gas abgereichert wird. In der WO 00/76629 A1 wird ein chemischer Reaktor mit Druckwechseladsorption offenbart. Eine chemische Reaktion wird mit Trennung von Produkt(en) und Reaktant(en) durch Druckwechseladsorption (PSA) durchgeführt, wobei eine Vorrichtung mit einer Vielzahl von Adsorbern verwendet wird, die mit ersten und zweiten Ventilbaugruppen in einem PSA-Modul zusammenwirken. Der PSA-Zyklus ist durch mehrere Zwischendruckniveaus zwischen höheren und niedrigeren Werten des PSA-Zyklus gekennzeichnet. Gasströme treten in das PSA-Modul auf den Zwischendruckniveaus sowie auf den höheren und niedrigeren Druckniveaus ein bzw. aus diesem aus, wobei sie von der (den) Verdichterstufe(n) eintreten bzw. aus den Absaug- oder Expanderstufen austreten, und zwar unter im Wesentlichen gleichmäßigen Strömungs- und Druckbedingungen. Ferner beschreibt die US 2003/0150163 A1 ein Verfahren zum Reformieren von Brennstoffen, umfassend den Schritt des Zuführens von kohlenstoffhaltigem Brennstoff und Dampf zu einem Reaktor, der mit einem Katalysator zum Reformieren von Brennstoffen und einem CO₂-Absorptionsmittel gefüllt ist, und des Ablassens von CO₂, und des Ein-stellen des Absorptionsmittels auf eine Absorptionstemperatur, wodurch der kohlenstoffhaltige Brennstoff in reformierten Brennstoff umgewandelt wird. In der FR 2 973 807 A1 wird ein Agglomerat beschrieben, das für ein thermozyklisches Verfahren mit einer kurzen Zykluszeit geeignet ist, umfassend ein erstes Phasenwechselmaterial und einen Bestandteil, der eine Dichte mit einem bestimmten Wert aufweist und einen Kern des Agglomerats bildet.

Aufgabe der vorliegenden Erfindung ist es daher, ein Verfahren zur Verfügung zu stellen, welches die Nachteile des Standes der Technik überwindet und eine energieeffiziente Abtrennung von Kohlendioxid aus Verbrennungsprodukten ermöglicht.

Die Aufgabe durch die Bereitstellung eines Verfahrens gelöst, welches mindestens einen Feststoffreaktor gemäß dem Hauptanspruch umfasst.

Beschrieben ist ein Feststoffreaktor zur Speicherung und Freisetzung von Kohlendioxid, umfassend ein gasdichtes bzw. fluiddichtes Gehäuse, welches einen Innenraum aufweist, mindestens einen Einlass zum Einspeisen von Fluiden, insbesondere von Kohlendioxid enthaltenden Abgasen, und mindestens einen Auslass zum Ausspeisen von Fluiden, insbesondere von Kohlendioxid abgereicherten Gasen, wobei der Innenraum des Gehäuses mit mindestens zwei unterschiedlichen Feststoffen befüllt ist, wobei der eine Feststoff zur Speicherung von Wärmeenergie vorgesehen ist und der andere Feststoff zur reversiblen Speicherung und Freisetzung von Kohlendioxid vorgesehen ist.

Beschrieben ist ein Feststoffreaktor, wobei das Gehäuse weiterhin Bauteile umfasst, welche zum Einbringen oder Austragen der Feststoffe ausgebildet sind.

Beschrieben ist ein Feststoffreaktor, wobei im Bereich des Einlasses und im Bereich des Auslasses von Gasen bzw. Fluiden Absperrorgane angeordnet sind, welche derart ausgebildet sind, um den Druck im Innenraum des Feststoffreaktors zu verändern, und/oder um Gase bzw. Fluide in den Feststoffreaktor einzuleiten und/oder um aus dem Feststoffreaktor austretende Gase bzw. Fluide abzuleiten.

Beschrieben ist ein Feststoffreaktor, wobei die Feststoffe zur Speicherung und Freisetzung von Kohlendioxid ausgewählt sind aus Kalziumoxid und Kalziumoxid enthaltenden Stoffen, ausgewählt aus Kalksteinen und Dolomiten bzw. Dolomitsteinen. Es ist erfindungsgemäß vorgesehen, dass die zu verwendenden Feststoff ggf. zuvor gebrannt werden, um die Aufnahme des Kohlendioxids zu ermöglichen.

Beschrieben ist ein Feststoffreaktor, wobei die Feststoffe zur Speicherung von Wärmeenergie ausgewählt sind aus inerten mineralischen Materialien wie Quarz, Granit, Siliciumdioxid, magmatischen Gesteinen, Siliciumkarbiden, Zirkoniumoxiden, metallischen Phasenwechselmaterialien, Gusseisen, Grauguss oder aus Mischungen der genannten Materialien.

Beschrieben ist ein Feststoffreaktor, wobei die mindestens zwei unterschiedlichen Feststoffe in Form von ummantelten Feststoffen vorliegen, bestehend aus einem äußeren Mantel und einem inneren Kern, wobei der innere Kern zur Speicherung der Wärmeenergie vorgesehen ist und der äußere Mantel zur reversiblen Speicherung und Freisetzung von Kohlendioxid vorgesehen ist.

Insbesondere bevorzugt ist dabei, dass die Doppelsalze ausgewählt sind aus Dolomit, Dolomitstein, dolomitischen Gesteinen, Dolomit bzw. Dolomitstein enthaltenden Gesteinen oder deren Mischungen.

Beschrieben ist ein Feststoffreaktor, wobei die mindestens zwei unterschiedlichen Feststoffe in Form von Doppelsalzen vorliegen, wobei eines der Salze des Doppelsalzes zur Speicherung von Wärmeenergie geeignet ist und das andere Salz des Doppelsalzes zur reversiblen Speicherung und Freisetzung von Kohlendioxid geeignet ist.

Insbesondere bevorzugt ist dabei, dass die Doppelsalze ausgewählt sind aus Dolomit, Dolomitstein, dolomitischen Gesteinen, Dolomit bzw. Dolomitstein enthaltenden Gesteinen oder deren Mischungen.

Beschrieben ist ein Feststoffreaktor, wobei die mindestens zwei unterschiedlichen Feststoffe eine Partikelgröße aufweisen, welche im cm-Bereich liegt.

Bevorzugt ist ferner ein Feststoffreaktor, wobei die im Feststoffreaktor eingebrachten Feststoffe ein durchströmbares Festbett ausbilden.

Beschrieben ist ein System zur Speicherung und Freisetzung von Kohlendioxid, umfassend mindestens einen Feststoffreaktor, mindestens einen Verdichter zur Verdichtung des Kohlendioxid enthaltenden Fluids bzw. Abgases, welches durch den Einlass des Feststoffreaktors eingebracht wird, wobei der Verdichter derart ausgebildet ist, dass dieser das von Kohlendioxid abgereicherte Gas bzw. Fluid, welches aus dem Reaktor mittels des Auslasses des Feststoffreaktors ausgebracht wird, adiabatisch entspannt, und mindestens einen Gegenstromrekuperator, welcher für den Wärmeaustausch des verdichteten Fluids bzw. Abgases, welches Kohlendioxid enthält, und des von Kohlendioxid abgereicherten Gases bzw. Fluids ausgebildet ist.

Beschrieben ist ein System, wobei im Bereich des Einlasses mindestens eine Zuführvorrichtung für erhitzte Fluide angeordnet ist, um das Kohlendioxid enthaltende Fluid nach der Erwärmung im Gegenstromrekuperator und vor dem Eintritt in den Einlass des Feststoffreaktors weiter zu erwärmen.

Weiterhin ist ein System beschrieben, bei dem ein oder mehrere Verdichter vorgesehen ist/sind, welche/r Luft und/oder Erdgas und/oder Heizöl verdichten und verbrennen und das Verbrennungsgas über die Zuführvorrichtung einblasen.

Beschrieben ist auch ein System, wobei die Zuführvorrichtung elektrisch beheizbar ist und das zugeführte Fluid Wasserstoffgas ist.

Beschrieben ist ein System, bei welchem weiterhin Rohrleitungen und Absperrorgane vorgesehen sind, welche den Feststoffreaktor aus dem System abkoppelbar ausgestalten und welche den Feststoffreaktor über den Auslass zum Ausspeisen von Gases bzw. Fluiden mit dem Rekuperator fluidisch verbinden.

Weiterhin ist ein System beschrieben, wobei das System mindestens zwei Feststoffreaktoren aufweist, wobei die Feststoffreaktoren mit den Bauteilen des Systems derart gastechnisch bzw. fluidisch verbunden sind, dass die jeweiligen Feststoffreaktoren unabhängig voneinander zur Speicherung oder zur Freisetzung von Kohlendioxid vorgesehen sind.

Gegenstand der vorliegenden Erfindung ist ein Verfahren zur Speicherung und Freisetzung von Kohlendioxid, wobei man
a) mindestens einen Feststoffreaktor zur Speicherung und Freisetzung von Kohlendioxid bereitstellt, wobei der mindestens eine Feststoffreaktor ein fluiddichtes Gehäuse umfasst, welches einen Innenraum aufweist, mindestens einen Einlass zum Einspeisen von Fluiden und mindestens einen Auslass zum Ausspeisen von Fluiden, wobei der Innenraum des Gehäuses mit mindestens zwei unterschiedlichen Feststoffen befüllt ist, wobei der eine Feststoff zur Speicherung von Wärmeenergie vorgesehen ist und der andere Feststoff zur reversiblen Speicherung und Freisetzung von Kohlendioxid vorgesehen ist;
b) ein Kohlendioxid enthaltendes Abgas in den Feststoffreaktor einbringt, wobei man das Kohlendioxid enthaltende Abgas derart verdichtet, dass der Partialdruck des Kohlendioxids in dem Kohlendioxid enthaltenen Abgas 1 bis 2 bar beträgt, wobei das Kohlendioxid aus dem Kohlendioxid enthaltenden Abgas in dem Feststoff zur reversiblen Speicherung und Freisetzung von Kohlendioxid gespeichert wird,
c) das Einbringen des Kohlendioxid enthaltenden Abgases beendet, wenn die Temperatur im Inneren des Feststoffreaktors 910 bis 960 °C beträgt,
d) den Feststoffreaktor, nach dem Erreichen der Innentemperatur von 910 °C bis 960°C, auf einen Druck von 0,1 bis 0,5 bar entspannt, wobei das Kohlendioxid, welches in dem Feststoff zur reversiblen Speicherung und Freisetzung von Kohlendioxid gespeichert ist, aus diesem Feststoff freigesetzt wird,
e) das durch die Entspannung aus dem Feststoff zur reversiblen Speicherung und Freisetzung von Kohlendioxid wieder freigesetzte Kohlendioxid aus dem Feststoffreaktor ableitet, und zwar solange, bis die Temperatur im Inneren des Feststoffreaktors 810 bis 850 °C beträgt,
f) das abgeleitete Kohlendioxid auf Normaldruck verdichtet und speichert.

Besonders bevorzugt ist dabei, dass der Partialdruck des Kohlendioxids im Schritt b) oberhalb von 1 bar liegt.

Besonders bevorzugt ist dabei weiterhin, dass der Druck im Inneren des Feststoffreaktors im Schritt d) weniger als 0,4 bar, besonders bevorzugt weniger als 0,2 bar, beträgt.

Besonders bevorzugt ist dabei auch, dass die Temperatur im Inneren des Feststoffreaktors im Schritt c) mehr als 910 °C beträgt.

Besonders bevorzugt ist ferner, dass die Temperatur im Inneren des Feststoffreaktors im Schritt e) unterhalb von 850 °C liegt.

Bevorzugt ist ferner ein Verfahren, wobei die Speicherung des Kohlendioxids und die anschließende Freisetzung im selben Temperaturbereich und im selben Reaktor stattfindet.

Weiterhin bevorzugt ist ein Verfahren, wobei die freiwerdende Enthalpie bei der Kohlendioxid-Absorption bzw. bei der Speicherung die Temperaturerhöhung bewirkt und dadurch im inert bleibenden Material gespeichert wird.

Bevorzugt ist auch ein Verfahren, wobei die gespeicherte Wärme nach der Druckabsenkung zur Freisetzung des Kohlendioxids wiederverwendet wird.

Die vorliegende Erfindung wird mit den beigefügten Zeichnungen näher erläutert. Es zeigt:
Fig. 1 eine Gleichgewichtskurve p_{eq} für die Kalzination und die Karbonisation mit Reaktionsbereich bei Umgebungsdruck;
Fig. 2 eine Gleichgewichtskurve p_{eq} für die Kalzination und die Karbonisation mit Reaktionsbereichen bei Überdruck des Abgases und Unterdruck des Kohlendioxidgases;
Fig. 3 eine erste Ausführungsform eines Feststoffreaktors bei der Karbonisation mit prinzipiellen Temperatur- und Partialdruckprofilen;
Fig. 4 eine erste Ausführungsform eines Feststoffreaktors bei der Kalzination;
Fig. 5 eine zweite Ausführungsform eines Feststoffreaktors bei der Karbonisation mit prinzipiellen Temperatur- und Partialdruckprofilen
Fig. 6 eine zweite Ausführungsform eines Feststoffreaktors bei der Kalzination mit prinzipiellen Temperatur- und Partialdruckprofilen
Fig. 7 eine erste Ausführungsform eines Anlagenschemas für Karbonisation und Kalzination;
Fig. 8 eine zweite Ausführungsform eines Anlagenschemas für Karbonisation und Kalzination; und
Fig. 9 eine Teilansicht eines Anlagenschemas mit einer Anordnung der Feststoffreaktoren zum parallelen Betrieb.

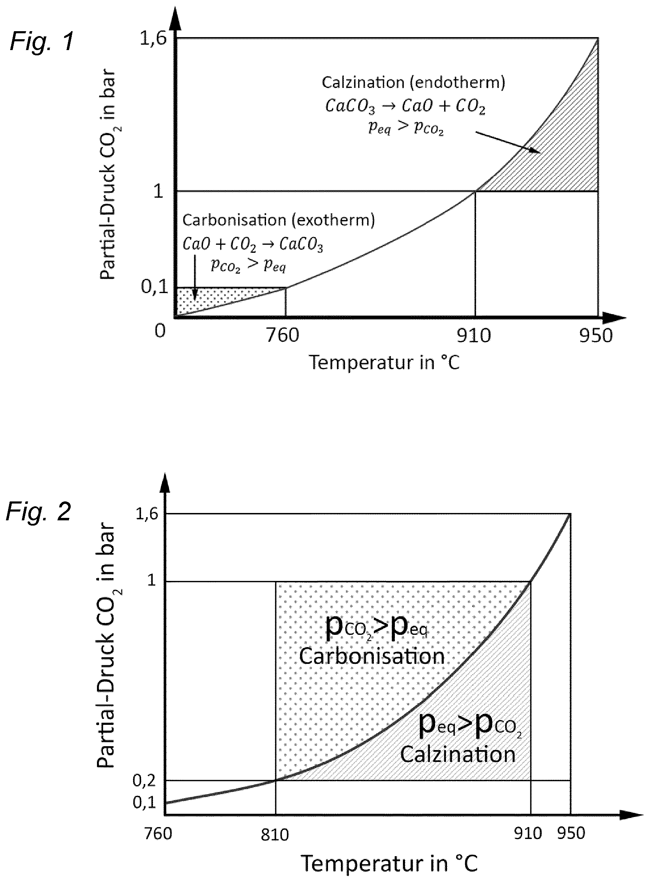

Das Kohlendioxid reagiert gemäß der chemischen Gleichung CaO+CO₂ -> CaCO₃ zu Kalkstein (CaCO₃). In der Figur 1 ist die Gleichgewichtskurve dieser Reaktion gezeigt. Für diese sogenannte Karbonisationsreaktion muss der Partialdruck des CO₂ über dem Gleichgewichtsdruck liegen. Liegt beispielsweise der Partialdruck im Abgas bei 0,1 bar, also bei 10 Vol.-% CO₂, so muss die Temperatur des Kalks (CaO) unterhalb von 760 °C liegen. Die Karbonisationsreaktion ist exotherm. Die freiwerdende Wärme kann somit nur bei anderen Prozessen verwendet werden, die deutlich unterhalb von 760°C ablaufen. Die Verwendung der Wärme ist somit eingeschränkt. Man kann die Wärme z. B. zur Dampferzeugung verwenden und dann mittels einer Turbine verstromen.

Aus dem gebildeten Kalkstein muss das CO₂ gemäß CaCO₃ -> CaO+CO₂ wieder ausgetrieben werden. Für diese sogenannte Kalzination muss der Gleichgewichtsdruck höher sein als der Partialdruck. Will man reines CO₂ von einem bar (Umgebungsdruck) erzeugen, so muss die Temperatur der Partikel also oberhalb 910°C liegen, da dies die Temperatur für den Gleichgewichtsdruck von 1 bar ist. Die Kalzination ist endotherm, es wird also Wärme benötigt, und zwar auf einem Temperaturniveau oberhalb von 910 °C.

Mit dem erfindungsgemäßen Verfahren und dem Feststoffreaktor kann Kohlendioxid aus Verbrennungsgasen mit erheblich weniger Energie abgetrennt werden als mit den bisher existierenden Verfahren. Die Kohlendioxidabtrennung aus den Abgasen bei der Energieerzeugung mit fossilen Brennstoffen und anschließender unterirdischer Lagerung oder Nutzung in andren Prozessen wird weltweit als ein unverzichtbarer Baustein zur Minimierung der globalen Erwärmung angesehen. Auf Grund des nur sehr geringen Energiebedarfes der CO₂-Abtrennung ist der Reaktor geeignet zur weltweiten Durchsetzung der CO₂-Sequestierung. Der Reaktor kann prinzipiell hinter alle Kraftwerke und Industrieanlagen wie Zement- und Kalkwerke (weltweit für 5 % der CO₂-Emissionen verantwortlich) gebaut werden.

Das erfindungsgemäße Verfahren hat nun zum Ziel, die bei der Karbonisation freiwerdende Reaktionsenthalpie direkt in einem Reaktor für die endotherme Kalzination wieder zu verwenden. Daher befinden sich im Reaktor entsprechende Materialien, welche die Wärme speichern. Die exotherme und endotherme Reaktionsenthalpien sind gleich groß. Damit entfällt so-wohl die lästige Abwärmenutzung der Karbonisation als auch die aufwändige Energieerzeugung der Kalzination. Da nach dem zweiten Hauptsatz der Thermodynamik Wärme nur von höherer zur niedrigerer Temperatur fließen kann, muss also die Karbonisation (CaO+CO₂ -> CaCO₃) auf einem höheren Temperaturniveau erfolgen als die endotherme Kalzination (CaCO₃ -> CaO+CO₂).

Die Gegenstände der vorliegenden Erfindung weisen die folgenden Merkmale und Vorteile auf:
- Ein Umbau vorhandener Anlagen wie z. B. bei Oxyfuel ist nicht notwendig. Der Feststoffreaktor enthält Dolomit- und/oder Kalkstein bzw. Kalkpartikel und inertes anorganisches Material, z. B. Kiespartikel, welche Wärme speichern können. Geeignet sind auch Phasenwechselmaterialien der bekannten Art. Dolomit hat den Vorteil, dass der interne Magnesitanteil bereits als Speichermedium dient.
- Zur Absorption des Kohlendioxids gemäß CaO+CO₂ -> CaCO₃ (Karbonisation) wird das Abgas unter Überdruck durch das Festbett geleitet. Dadurch wird das Temperaturniveau dieser Karbonisationsreaktion angehoben.
- Die anschließende Kalzination (CaCO₃ -> CaO+CO₂) wird bei Unterdruck durchgeführt. Dadurch wird das Temperaturniveau dieser Kalzinationsreaktion abgesenkt.
- Der CO₂-Partialdruck des Abgases muss bei der Karbonisation höher sein als der vom Reingas des CO₂ bei der Kalzination, wie in Figur 2 dargestellt.
- Dadurch erfolgt die exotherme Karbonisation auf einem höheren Temperaturniveau als die endotherme Kalzination.
- Die bei der Karbonisation freiwerdende Wärme wird im inerten Material gespeichert und kann anschließend somit zur Kalzination genutzt werden.

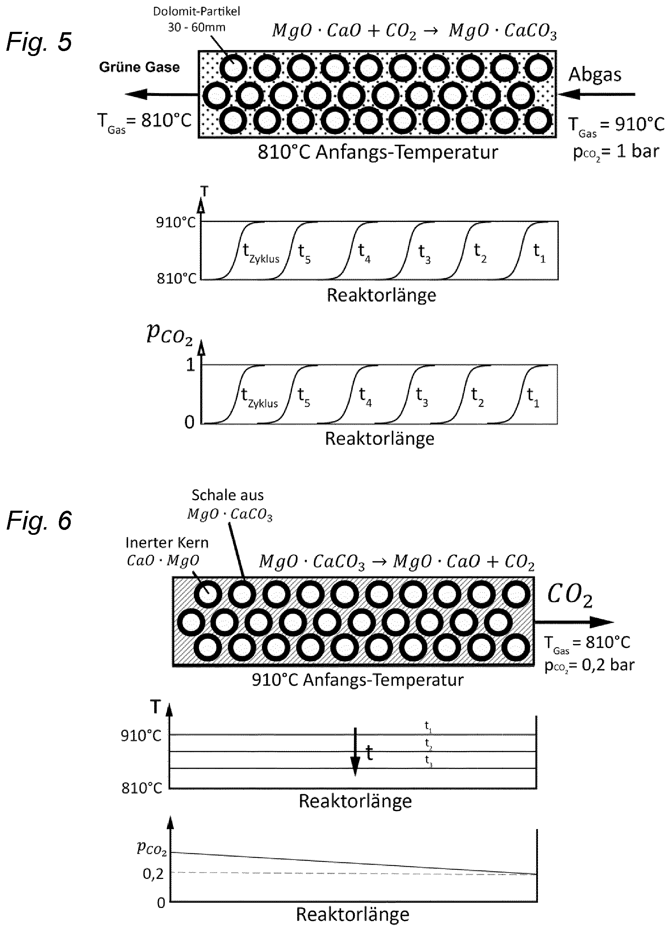

In einer besonders bevorzugten Ausführungsform der vorliegenden Erfindung befinden sich im Reaktor stückige Kalksteine oder dolomitische Steine im cm-Bereich. Der oberflächennahe Bereich absorbiert das Kohlendioxid (in Figur 5 als dunkler ringförmiger Bereich gekennzeichnet bei den als kugelförmig dargestellten Steinen). Die bei der Absorption freiwerdende Reaktionsenthalpie wird ins Innere der Steine geleitet und erwärmt dadurch die Steine. Die Reaktionsenthalpie wird somit als latente Enthalpie gespeichert.

Die Größe der Steine wird so gewählt, dass die Masse des unreagierten, inerten Kerns ausreicht, um die Reaktionsenthalpie zu speichern. Es kann nur ein oberflächennaher Bereich Kohlendioxid absorbieren, da durch die hierdurch hervorgerufene Volumenvergrößerung die Schale aus CaCO3 dicht wird und dann kein weiteres Kohlendioxid in den Kern diffundieren kann.

Als Steine werden dolomitische Steine bevorzugt. Zum einen dient der inerte MgO-Anteil als Speichermasse, zum anderen verhindert der MgO-Anteil ein Sintern des CaO-Anteils, so dass viele Zyklen durchgeführt werden können, ohne das ein sogenanntes Totbrennen des Kalkes auftritt. In Vorversuchen wurden über 500 Zyklen durchgeführt, ohne das ein Abnehmen der Absorptionsfähigkeit auftrat. In den bisherigen Verfahren mit Partikeln im µm-Bereich war die ursprüngliche Absorptionsfähigkeit nach 10 Zyklen auf etwa 10 % gesunken.

Nach der Druckabsenkung für die Kalzination wird die endotherme Reaktionsenthalpie dann durch die gespeicherte, latente Enthalpie gedeckt und die Steine kühlen sich dabei wieder ab, wie in Figur 6 dargestellt ist.

Gemäß der Erfindung ist es besonders vorteilhaft, dass die erfindungsgemäß im Reaktor eingesetzten Steine eine Größe im cm-Bereich aufweisen. Dadurch wird sichergestellt, dass bei der Beladung der Steine mit dem Kohlendioxid, wodurch sich das Volumen der Steine vergrößert, der Durchlass der Gase bzw. Fluide nicht gestört wird. Auch bewirkt die Größe der Steine, dass die Anzahl der Zyklen vergrößert werden kann, da eine Versinterung vermieden wird. Bevorzugt sind Steingrößen von 0,5 cm bis 10 cm, ganz besonders bevorzugt 2 cm bis 5 cm.

Die nachfolgenden Ausführungsbeispiele erläutern die Erfindung näher, ohne den Umfang der Erfindung zu beschränken.

Die erfinderische Grundidee des erfindungsgemäßen Verfahrens besteht nun darin, dass das Abgas für die Karbonisation verdichtet wird und dass die nachfolgende Kalzination unter Unterdruck durchgeführt wird. Das Druckverhältnis muss dabei so eingestellt werden, dass der CO₂-Partialdruck bei der Karbonisation oberhalb des CO₂-Druckes bei der Kalzination liegt. Dieses Prinzip wird mit der Figur 2 erläutert. In diesem Beispiel wird angenommen, dass das Abgas so verdichtet wird, dass der CO₂-Partialdruck 1 bar beträgt. Ein Abgas mit 10 Vol.-% CO₂ müsste also auf 10 bar verdichtet werden. Die Kalzination wird hier bei 0,2 bar Absolutdruck durchgeführt. Die zugehörigen Gleichgewichtstemperaturen sind 910 °C bzw. 810 °C. Die Karbonisation kann jetzt in dem Temperaturbereich von 810 °C bis 910 °C durchgeführt werden, da in diesem Bereich der CO₂-Partialdruck stets größer als der Gleichgewichtsdruck ist. In demselben Temperaturbereich kann ebenfalls auch die Kalzination durchgeführt werden, da die Bedingung hierfür, Gleichgewichtsdruck größer als CO₂-Druck, erfüllt ist (siehe Figur 2).

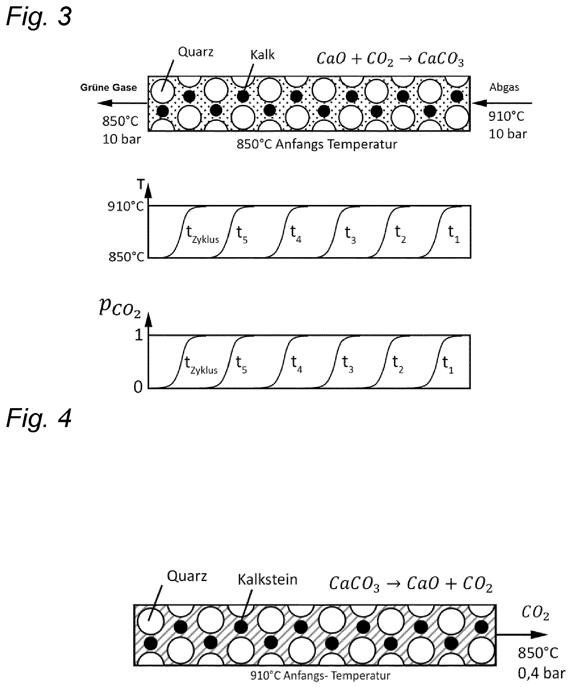

Zur Übertragung der Wärme von der Karbonisation zur Kalzination wird ein Feststoffreaktor verwendet. Dieser besteht entsprechend der Figur 3 aus Kalkpartikel und inerten Feststoffpartikel, wie beispielsweise Quarzpartikel. Die inerten Partikel dienen dazu, die bei der Karbonisation entstehenden Wärme zu speichern. Je nach Temperaturdifferenz zwischen Karbonisation und Kalzination liegt das Volumenverhältnis zwischen den inerten Partikel und den Kalkpartikeln bei 10 bis 15. Je kleiner die Temperaturdifferenz ist desto mehr inerte Partikel werden zur Speicherung benötigt. Bei dem in der Abbildung 3 gezeigtem Beispiel wird angenommen, dass das Festbett nach der Kalzination eine Temperatur von 850 °C habe. Strömt jetzt ein Abgas mit beispielsweise 1 bar CO₂-Partialdruck mit 910 °C ein, so kühlt sich das Gas ab. Der Partialdruck ist dann höher als der Gleichgewichtsdruck, das CO₂ kann somit an den Kalkpartikeln abgeschieden werden. Durch die Reaktionswärme heizt sich das Festbett mit der Zeit auf 910 °C auf. Die sich mit der Zeit ergebenden Partialdruck- und Temperaturprofile sind schematisch dargestellt. Höhere Temperaturen als 910 °C sind nicht möglich, da dann die Reaktion zum Erliegen kommt. Die maximale Temperatur des Rektors kann über den CO₂-Partialdruck eingestellt werden. Je höher dieser ist, desto höher ist die maximal mögliche Temperatur.

Ist der Reaktor auf 910 °C geladen, wird der Abgasstrom in einen anderen, entladenen Reaktor geleitet (siehe hierzu Figur 4). Der Druck im geladenen Reaktor wird dann auf 0,4 bar gesenkt. Der Gleichgewichtsdruck ist jetzt höher als der Partialdruck, so dass die reaktiven Partikel kalzinieren. Der Vorgang ist analog der Verdampfung von Wasser aus einem feuchten, porösen Körper, dessen Temperatur höher ist als die Sattdampftemperatur des umgebenden Wasserdampfes. Während der Verdampfung kühlt der poröse Körper ab, um die Verdampfungsenthalpie aufzubringen. Analog kühlt sich das Festbett bis auf die Gleichgewichtstemperatur von 850 °C ab, um die Reaktionsenthalpie aufzubringen. Der entstehende CO₂-Strom überträgt die Wärme zwischen den inerten und den reaktiven Partikeln. Sollte der CO₂-Strom zur Wärmeübertragung nicht ausreichen, kann gegebenenfalls CO₂ im Kreislauf gefahren werden, zur Erhöhung der Strömung im Reaktor. Nach der Entladung wird der Reaktor wieder geladen. Es findet also ein regenerativer Enthalpieaustausch statt.

In den Figuren 5 und 6 wird nun eine weitere und besonders bevorzugte Ausführungsform des erfindungsgemäßen Reaktors dargestellt. Zur Übertragung der Wärme von der Karbonisation zur Kalzination wird ein Feststoffreaktor verwendet. Dieser besteht entsprechend der Figur 5 stückigen Kalksteinen und dolomitischen Gesteinen. Der inerte Kern dient dazu, die bei der Karbonisation entstehenden Wärme zu speichern. Je nach Temperaturdifferenz zwischen Karbonisation und Kalzination liegt das Volumenverhältnis zwischen dem inerten Kern und der reagierenden Schale 5 bis 10. Bei dem in der Abbildung Figur 5 gezeigtem Beispiel wird angenommen, dass das Festbett nach der Kalzination eine Temperatur von 810 °C habe. Strömt jetzt ein Abgas mit beispielsweise 1 bar CO₂-Partialdruck mit 910 °C ein, so kühlt sich das Gas ab. Der Partialdruck ist dann höher als der Gleichgewichtsdruck, das CO₂ kann somit abgeschieden werden. Durch die Reaktionswärme heizt sich das Festbett mit der Zeit auf 910 °C auf. Die sich mit der Zeit ergebenden Partialdruck- und Temperaturprofile sind schematisch dargestellt. Höhere Temperaturen als 910 °C sind nicht möglich, da dann die Reaktion zum Erliegen kommt. Die maximale Temperatur des Rektors kann über den CO2-Partialdruck eingestellt werden. Je höher dieser ist, je höher ist die maximal mögliche Temperatur.

Ist der Reaktor auf 910 °C geladen, wird der Abgasstrom in einen anderen, entladenen Reaktor geleitet, wie dies in der Figur 6 dargestellt ist. Der Druck im geladenen Reaktor wird dann auf beispielsweise 0,2 bar gesenkt. Der Gleichgewichtsdruck ist jetzt höher als der Partialdruck, so dass die reaktiven Steine kalzinieren. Der Vorgang ist analog der Verdampfung von Wasser aus einem feuchten, porösen Körper, dessen Temperatur höher ist als die Sattdampftemperatur des umgebenden Wasserdampfes. Während der Verdampfung kühlt der poröse Körper ab, um die Verdampfungsenthalpie aufzubringen. Analog kühlt sich das Festbett bis auf die Gleichgewichtstemperatur von 810 °C ab, um die Reaktionsenthalpie aufzubringen. Nach der Entladung wird der Reaktor wieder geladen. Es findet also ein regenerativer Enthalpieaustausch statt.

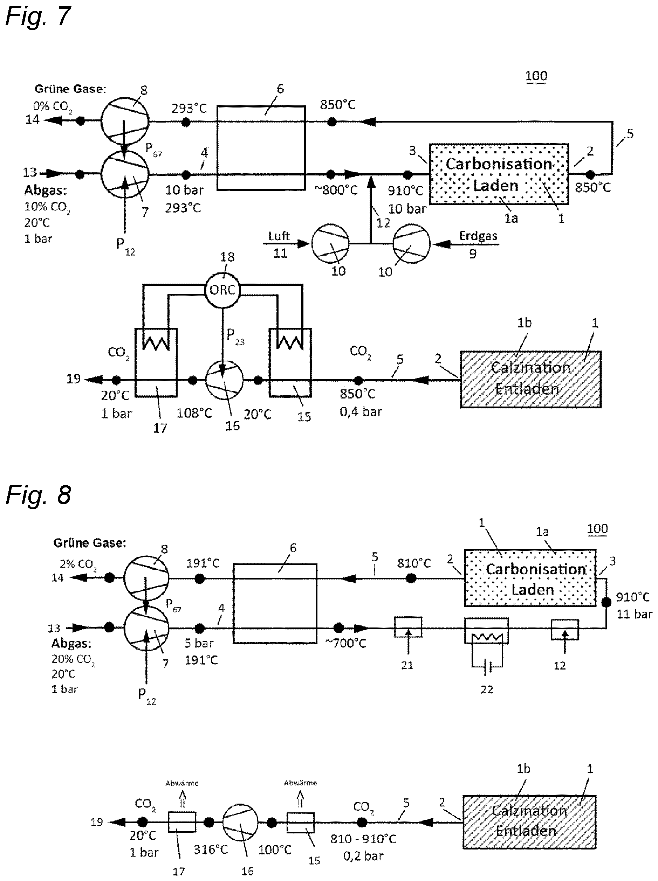

In der Figur 7 ist ein Anlagenschema 100 für den Gesamtprozess dargestellt. Die in diesem Ausführungsbeispiel angegebenen Temperaturen beziehen sich zum besseren Verständnis des Prozesses auf das Beispiel, dass die Karbonisation bei einem CO₂-Partialdruck von 1 bar und die Kalzination unter reinem CO₂ bei 0,4 bar durchgeführt wird. Alle Temperaturen gelten für einen adiabaten, reversiblen Idealprozess. Das Abgas 13 hat eine Temperatur von 20 °C, den Umgebungsdruck von 1 bar und 10 % CO₂. Zur Karbonisation wird dann ein Druck von 10 bar und 910 °C benötigt. Das Abgas 13 wird daher zunächst auf 10 bar verdichtet, wobei die Temperatur auf 293 °C steigt. Aus dem Karbonisator 1a tritt das Reingas mit 850 °C. Dieses Gas erwärmt in einen Gegenstromrekuperator 6 das Abgas auf etwa 800 °C. Für die Resterwärmung auf 910 °C wird Erdgas 9 benötigt. Dieser Erdgasstrom 9 stellt den hauptsächlichen Energiebedarf des Gesamtprozesses dar. Die bei der Entspannung des Reingases freiwerdende Energie wird zur Verdichtung verwandt. Dadurch wird für die Verdichtung des Abgases nur ein relativ kleiner elektrischer Strom benötigt. Aus dem Kalzinationsprozess tritt der Kohlendioxidstrom mit 850 °C aus. Diese Wärme wird zur Stromerzeugung, z B. durch ORC 18, genutzt. Dieser Strom reicht aus zur Verdichtung des Kohlendioxidstromes auf Umgebungsdruck.

Das in der Figur 7 dargestellte erfindungsgemäße System wird nachfolgend näher beschrieben. Das von Kohlendioxid zu befreiende Fluid, nämlich das Abgas wird über den Abgaseinlass 13 in das System eingeführt. Mittels des Verdichters 7 wird das Abgas auf den entsprechenden Partialdruck des CO₂ komprimiert und über die Einlassleitung 4 durch den Gegenstromrekuperator 6 geführt. Das dadurch erwärmte Abgas wird in den Reaktor 1a zur Karbonisation über den Einlass 3 eingeführt. Im Reaktor 1a wird das CO₂ als Kalziumkarbonat gebunden und das nunmehr CO₂-arme Abgas über die Auslassleitung 5 wieder in den Gegenstromrekuperator 6 geführt. Das nunmehr gereinigte Abgas wird über eine Entspannvorrichtung 8 unter Normaldruck über den Abgasauslass 14 abgegeben. Um das Kohlendioxid enthaltende Abgas 13 auf die erforderliche Reaktionstemperatur von 910 °C zu erwärmen, wird ein Brennstoff, z. B. Erdgas, über den Einlass 9 eingeführt, in dem Verdichter 10 auf den Reaktionsdruck verdichtet (hier 10 bar) und über die Einspeiseleistung 12 in das Abgas eingedüst. Die Brennstoffmenge ist so gering, dass der Sauerstoff im Abgas zur Verbrennung ausreicht. Durch die Verbrennung nimmt der Sauerstoffgehalt in Abgas nur um etwa 1 % bis 1,5 % ab. Zur stabilen Verbrennung kann Luft 11 mittels Verdichter 10 verdichtet und mit dem Erdgas 9 verbrannt werden. Das Verbrennungsgas wird dann über die Gaszufuhrleitung 12 in das Abgas 13 gedüst. Zur stabilen Verbrennung kann alternativ ein Teil des Abgasstromes umgeleitet werden. In diesen umgeleiteten Abgasstrom wird das Erdgas eingedüst. Die Menge des umgeleiteten Abgasstromes ist so groß, dass die Temperatur über 1200 °C steigt, bei der eine vollständige Verbrennung gewährleistet ist.

Befindet sich der Feststoffreaktor 1 nunmehr im Zustand 1b des Entladens des CO₂, so wird das CO₂, welches im Kalziumkarbonat gebunden ist, über den Auslass 2 während des Erkalten des Feststoffreaktors aus diesen hinausgeführt. Das CO₂ wird in dem Niederdruckwärmeübertrager 15 abgekühlt, dann in dem Verdichter 16 auf Umgebungsdruck gebracht und in dem Normaldruckwärmeübertrager 17 nochmals abgekühlt. Die in den Wärmeübertragern 15 und 17 abgeführte Wärme wird in der ORC-Anlage 18, die auch eine Dampfturbine sein könnte, verstromt. Dieser Strom wird in der Anlage für die Verdichter eingesetzt. Durch den Auslass 19 entweicht nunmehr reines CO₂ unter Normalbedingungen. Durch die energetische Kopplung der Fluidströme wird eine hohe Energieeffizienz erzielt, sodass nur wenig Energie von außen in das System eingeführt werden muss, um die entsprechenden Reaktionsprozesse der Karbonisation und Kalzination durchführen zu können.

In der Figur 8 ist eine zweite Ausführungsform des erfindungsgemäßen Systems dargestellt. In der Figur 8 ist ein Anlagenschema 100 für den Gesamtprozess dargestellt. Die in diesem Ausführungsbeispiel angegebenen Temperaturen beziehen sich zum besseren Verständnis des Prozesses auf das Beispiel, dass die Karbonisation bei einem CO₂-Partialdruck von 1 bar und die Kalzination unter reinem CO₂ bei 0,2 bar durchgeführt wird. Alle Temperaturen gelten für einen adiabaten, reversiblen Idealprozess. Das Abgas 13 hat eine Temperatur von 20 °C, den Umgebungsdruck von 1 bar und 10 % CO₂. Zur Karbonisation wird dann ein Druck von 10 bar und 910 °C benötigt. Das Abgas 13 wird daher zunächst auf 10 bar verdichtet, wobei die Temperatur auf 293 °C steigt. Aus dem Karbonisator 1a tritt das Reingas mit 810 °C. Dieses Gas erwärmt in einen Gegenstromrekuperator 6 das Abgas auf etwa 700 °C. Für die Resterwärmung auf 910 °C kann elektrische Energie über Heizelemente eingesetzt werden, es kann Wasserstoff eingedüst und verbrannt werden, falls sich noch etwas Sauerstoff im Abgas enthalten ist, oder es kann ein Verbrennungsgas eingedüst werden. Letzteres würde allerdings zusätzliches Kohlendioxid erzeugen. Dieser Gasstrom 9 stellt den hauptsächlichen Energiebedarf des Gesamtprozesses dar. Die bei der Entspannung des Reingases freiwerdende Energie wird zur Verdichtung verwandt. Dadurch wird für die Verdichtung des Abgases nur eine relativ kleine Menge elektrischen Stroms benötigt. Aus dem Kalzinationsprozess tritt der Kohlendioxidstrom mit 810 °C aus. Diese Wärme könnte beispielsweise zur Stromerzeugung, z B. durch ORC 18, genutzt werden.

Das in der Figur 8 dargestellte erfindungsgemäße System wird nachfolgend näher beschrieben. Das von Kohlendioxid zu befreiende Fluid, nämlich das Abgas wird über den Abgaseinlass 13 in das System eingeführt. Mittels des Verdichters 7 wird das Abgas auf den entsprechenden Partialdruck des CO₂ komprimiert und über die Einlassleitung 4 durch den Gegenstromrekuperator 6 geführt. Das dadurch erwärmte Abgas wird in den Reaktor 1a zur Karbonisation über den Einlass 3 eingeführt. Im Reaktor 1a wird das CO₂ als Kalziumkarbonat gebunden und das nunmehr CO₂-arme Abgas über die Auslassleitung 5 wieder in den Gegenstromrekuperator 6 geführt. Das nunmehr gereinigte Abgas wird über eine Entspannvorrichtung 8 unter Normaldruck über den Abgasauslass 13 abgegeben. Um das Kohlendioxid enthaltende Abgas 14 auf die erforderliche Reaktionstemperatur von 910 °C zu erwärmen, kann Wasserstoff über Lanzen 21 eingedüst werden, kann das Gas durch elektrische Heizwendeln 22 strömen oder es kann ein heißes Verbrennungsgas über Lanzen 12 eingedüst werden.

Befindet sich der Feststoffreaktor 1 nunmehr im Zustand 1b des Entladens des CO₂, so wird das CO₂, welches im Kalziumkarbonat gebunden ist, über den Auslass 2 während des Erkalten des Feststoffreaktors aus diesen hinausgeführt. Das CO₂ wird in dem Niederdruckwärmeübertrager 15 ab-gekühlt, dann in dem Verdichter 16 auf Umgebungsdruck gebracht und in dem Normaldruckwärmeübertrager 17 nochmals abgekühlt. Durch den Auslass 19 entweicht nunmehr reines CO₂ unter Normalbedingungen. Durch die energetische Kopplung der Gasströme wird eine hohe Energieeffizienz erzielt, sodass nur wenig Energie von außen in das System eingeführt werden muss, um die entsprechenden Reaktionsprozesse der Karbonisation und Kalzination durchführen zu können.

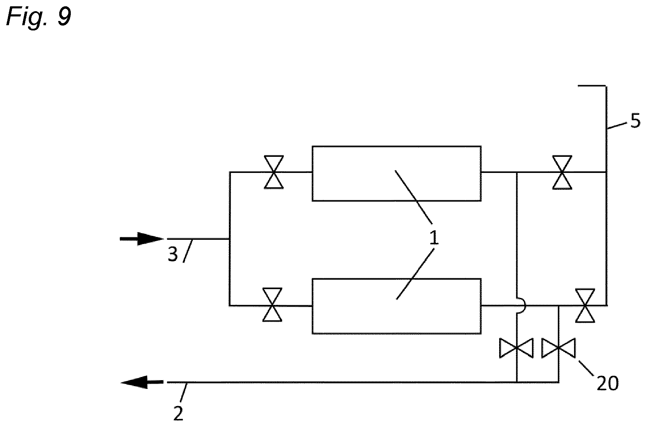

In der Figur 9 ist eine Teilansicht eines erfindungsgemäßen Systems in einer ersten Ausführungsform gezeigt. Die Feststoffreaktoren 1 sind parallel zueinander angeordnet und jeweils mit dem Einlass 3, der Auslassleitung 5 und dem Auslass 2 fluidisch verbunden, wobei Absperrungsorgane 20 derart angeordnet sind, um jeden der beiden Reaktoren unabhängig voneinander für den Karbonisationsprozess mit den Leitungen 3 und 5 zu verbinden oder für den Kalzinationsprozess mit dem Auslass 2 zu verbinden. Somit ist es möglich, die jeweiligen Feststoffreaktoren 1, welche sich in unterschiedlichen Betriebszuständen befinden können, separat zu betreiben. Dies bedeutet, dass einer der Festbettreaktoren sich im Zustand 1a des Beladens mit CO₂ befindet, während sich der andere Festbettreaktor im Zustand 1b des Entladens des CO₂ befindet. In anderen Ausführungsformen der vorliegenden Erfindung können weitere Festbettreaktoren 1 vorgesehen sein, wobei jeder der Reaktoren in einem der Zustände 1a oder 1b betrieben wird (nicht dargestellt). Es ist erfindungsgemäß auch vorgesehen, dass weitere Feststoffreaktoren entsprechend angeordnet werden können, deren Anzahl erfindungsgemäß nicht beschränkt werden muss.

### Bezugszeichenliste

- 1: Feststoffreaktor
- 1a: Feststoffreaktor im Zustand des Beladens mit CO₂
- 1b: Feststoffreaktor im Zustand des Entladens des CO₂
- 2: Auslass
- 3: Einlass
- 4: Einlassleitung
- 5: Auslassleitung
- 6: Gegenstromrekuperator
- 7: Verdichter für Abgas
- 8: Entspannvorrichtung für Reingas
- 9: Brenngaszufuhr
- 10: Verdichter
- 11: Luftzufuhr
- 12: Verbrennungsgaszufuhr
- 13: Abgaseinlass bzw. Abgas
- 14: Abgasauslass (CO₂-arm)
- 15: Niederdruckwärmeübertrager
- 16: Verdichter für CO₂
- 17: Normaldruckwärmeübertrager
- 18: ORC-Anlage zur Stromerzeugung
- 19: CO₂-Auslass
- 20: Absperrorgane
- 21: Wasserstoffeindüsung
- 22: Elektrische Beheizung
- 100: System zur Speicherung und Freisetzung von Kohlendioxid

## Patentansprüche

1. Verfahren zur Speicherung und Freisetzung von Kohlendioxid, wobei man
a) mindestens einen Feststoffreaktor zur Speicherung und Freisetzung von Kohlendioxid bereitstellt, wobei der mindestens eine Feststoffreaktor (1) ein fluiddichtes Gehäuse umfasst, welches einen Innenraum aufweist, mindestens einen Einlass (3) zum Einspeisen von Fluiden und mindestens einen Auslass (2) zum Ausspeisen von Fluiden, wobei der Innenraum des Gehäuses mit mindestens zwei unterschiedlichen Feststoffen befüllt ist, wobei der eine Feststoff zur Speicherung von Wärmeenergie vorgesehen ist und der andere Feststoff zur reversiblen Speicherung und Freisetzung von Kohlendioxid vorgesehen ist;
b) ein Kohlendioxid enthaltendes Abgas in den Feststoffreaktor einbringt, wobei man das Kohlendioxid enthaltende Abgas derart verdichtet, dass der Partialdruck des Kohlendioxids in dem Kohlendioxid enthaltenen Abgas 1 bis 2 bar beträgt, wobei das Kohlendioxid aus dem Kohlendioxid enthaltenden Abgas in dem Feststoff zur reversiblen Speicherung und Freisetzung von Kohlendioxid gespeichert wird,
c) das Einbringen des Kohlendioxid enthaltenden Abgases beendet, wenn die Temperatur im Inneren des Feststoffreaktors 910 bis 960 °C beträgt,
d) den Feststoffreaktor, nach dem Erreichen der Innentemperatur von 910 °C bis 960°C, auf einen Druck von 0,1 bis 0,5 bar entspannt, wobei das Kohlendioxid, welches in dem Feststoff zur reversiblen Speicherung und Freisetzung von Kohlendioxid gespeichert ist, aus diesem Feststoff freigesetzt wird,
e) das durch die Entspannung aus dem Feststoff zur reversiblen Speicherung und Freisetzung von Kohlendioxid wieder freigesetzte Kohlendioxid aus dem Feststoffreaktor ableitet, und zwar solange, bis die Temperatur im Inneren des Feststoffreaktors 810 bis 850 °C beträgt,
f) das abgeleitete Kohlendioxid auf Normaldruck verdichtet und speichert.

2. Verfahren, gemäß Anspruch 1, **dadurch gekennzeichnet, dass** der Partialdruck des Kohlendioxids im Schritt b) oberhalb von 1 bar liegt.

3. Verfahren, gemäß Anspruch 1 oder 2, **dadurch gekennzeichnet, dass** der Druck im Inneren des Feststoffreaktors im Schritt d) weniger als 0,4 bar, besonders bevorzugt weniger als 0,2 bar, beträgt.

4. Verfahren, gemäß einem der Ansprüche 1 bis 3, **dadurch gekennzeichnet, dass** die Temperatur im Inneren des Feststoffreaktors im Schritt c) mehr als 910 °C beträgt.

5. Verfahren, gemäß einem der Ansprüche 1 bis 4, **dadurch gekennzeichnet, dass** die Temperatur im Inneren des Feststoffreaktors im Schritt e) unterhalb von 850 °C liegt.

6. Verfahren, gemäß Anspruch 1, **dadurch gekennzeichnet, dass** die Speicherung des Kohlendioxids und die anschließende Freisetzung im selben Temperaturbereich und im selben Reaktor stattfindet.

7. Verfahren, gemäß Anspruch 1, **dadurch gekennzeichnet, dass** die freiwerdende Enthalpie bei der Kohlendioxid-Absorption bzw. bei der Speicherung die Temperaturerhöhung bewirkt und dadurch im inert bleibenden Material gespeichert wird.

8. Verfahren, gemäß Anspruch 1, **dadurch gekennzeichnet, dass** die gespeicherte Wärme nach der Druckabsenkung zur Freisetzung des Kohlendioxids wiederverwendet wird.

## Claims

1. Method for storage and release of carbon dioxide, wherein one
a) provides at least one solids reactor for storage and release of carbon dioxide, wherein the at least one solids reactor (1) comprises a fluid-tight housing, which has an interior, at least one inlet (3) for feeding in fluids and at least one outlet (2) for discharging of fluids, wherein the interior of the housing is filled with at least two different solids, wherein the one solid is provided for storage of thermal energy and the other solid is provided for reversible storage and release of carbon dioxide;
b) introduces a carbon dioxide-containing exhaust gas into the solids reactor, wherein one compresses the carbon dioxide-containing exhaust gas in such a way that the partial pressure of the carbon dioxide in the carbon dioxide-containing exhaust gas is 1 to 2 bar, wherein the carbon dioxide from the carbon dioxide-containing exhaust gas is stored in the solid for reversible storage and release of the carbon dioxide;
c) stops the introduction of the carbon dioxide-containing exhaust gas when the temperature in the interior of the solids reactor is 910 to 960 °C;
d) releases the tension of the solids reactor to a pressure of 0.1 to 0.5 bar, after reaching the internal temperature of 910 °C to 960 °C, wherein the carbon dioxide stored in the solid for reversible storage and release of carbon dioxide is released from said solid;
e) discharges from the solids reactor the carbon dioxide released again by the tension release from the solid for reversible storage and release of carbon dioxide, namely as long as the temperature in the interior of the solids reactor is 810 to 850 °C;
f) compresses the discharged carbon dioxide to normal pressure and stores it.

2. Method according to claim 1, **characterized in that** the partial pressure of the carbon dioxide in step b) is above 1 bar.

3. Method according to claims 1 or 2, **characterized in that** the pressure in the interior of the solids reactor in step d) is less than 0.4 bar, particularly preferred less than 0.2 bar.

4. Method according to any of claims 1 to 3, **characterized in that** the temperature in the interior of the solids reactor in step c) is more than 910 °C.

5. Method according to any of claims 1 to 4, **characterized in that** the temperature in the interior of the solids reactor in step e) is below 850 °C.

6. Method according to claim 1, **characterized in that** the storage of the carbon dioxide and the subsequent release takes place in the same temperature range and in the same reactor.

7. Method according to claim 1, **characterized in that** the enthalpy released during the carbon dioxide absorption or the storage, respectively, causes the temperature increase and is thereby stored in the material that remains inert.

8. Method according to claim 1, **characterized in that** the stored heat is reused after the pressure reduction for the release of the carbon dioxide.

## Revendications

1. Procédé pour stocker et libérer du dioxyde de carbone, dans lequel
a) on prévoit au moins un réacteur à matière solide pour stocker et libérer du dioxyde de carbone, ledit au moins un réacteur à matière solide (1) comprenant un boîtier étanche aux fluides qui comprend un espace intérieur, au moins une entrée (3) pour introduire des fluides et au moins une sortie (2) pour évacuer des fluides, l'espace intérieur du boîtier étant rempli d'au moins deux solides différents, l'un des solides étant prévu pour le stockage d'énergie thermique et l'autre solide étant prévu pour le stockage et la libération réversibles de dioxyde de carbone ;
b) un gaz d'échappement contenant du dioxyde de carbone est introduit dans le réacteur à matière solide, le gaz d'échappement contenant du dioxyde de carbone étant comprimé de telle sorte que la pression partielle du dioxyde de carbone dans le gaz d'échappement contenant du dioxyde de carbone soit comprise entre 1bar et 2bars, le dioxyde de carbone provenant du gaz d'échappement contenant du dioxyde de carbone étant stocké dans la matière solide pour le stockage et la libération réversibles du dioxyde de carbone,
c) l'introduction du gaz d'échappement contenant du dioxyde de carbone est arrêtée lorsque la température à l'intérieur du réacteur à matière solide est comprise entre 910°C et 960°C,
d) le réacteur à matière solide, après avoir atteint la température interne de 910°C à 960°C, est détendu à une pression de 0,1bar à 0,5bar, le dioxyde de carbone stocké dans la matière solide pour le stockage et la libération réversibles du dioxyde de carbone étant libéré de cette matière solide,
e) le dioxyde de carbone libéré à nouveau par la détente du matériau solide pour le stockage et la libération réversibles du dioxyde de carbone est évacué du réacteur à matériau solide jusqu'à ce que la température à l'intérieur du réacteur à matériau solide soit comprise entre 810°C et 850°C,
f) le dioxyde de carbone évacué est comprimé à pression normale et est stocké.

2. Procédé selon la revendication 1, **caractérisé en ce que** la pression partielle du dioxyde de carbone dans l'étape b) est supérieure à 1bar.

3. Procédé selon la revendication 1 ou la revendication 2, **caractérisé en ce que** la pression à l'intérieur du réacteur à matière solide dans l'étape d) est inférieure à 0,4bar, de préférence inférieure à 0,2bar.

4. Procédé selon l'une des revendications 1 à 3, **caractérisé en ce que** la température à l'intérieur du réacteur à matière solide à l'étape c) est supérieure à 910°C.

5. Procédé selon l'une des revendications 1 à 4, **caractérisé en ce que** la température à l'intérieur du réacteur à matière solide à l'étape e) est inférieure à 850°C.

6. Procédé selon la revendication 1, **caractérisé en ce que** le stockage du dioxyde de carbone et sa libération ultérieure ont lieu dans la même plage de température et dans le même réacteur.

7. Procédé selon la revendication 1, **caractérisé en ce que** l'enthalpie libérée lors de l'absorption ou du stockage du dioxyde de carbone provoque une élévation de la température et est ainsi stockée dans le matériau qui reste inerte.

8. Procédé selon la revendication 1, **caractérisé en ce que** la chaleur stockée est réutilisée après la réduction de pression pour libérer le dioxyde de carbone.
